# EUROPÄISCHE PATENTSCHRIFT

(11) **EP 2 215 025 B1**
(45) Veröffentlichungstag und Bekanntmachung des Hinweises auf die Patenterteilung: **04.11.2020**
(21) Anmeldenummer: 08804353.4
(22) Anmeldetag: 18.09.2008
(51) Int. Cl.: C03B 19/06, C03B 19/12, C03C 3/06

(54) **VERFAHREN ZUR HERSTELLUNG VON DOTIERTEM QUARZGLAS**
METHOD FOR PRODUCING DOPED QUARTZ GLASS
PROCÉDÉ DE FABRICATION DE VERRE DE QUARTZ DOPÉ

(30) Priorität: 20.09.2007 DE 102007045097
(43) Veröffentlichungstag der Anmeldung: 11.08.2010
(73) Patentinhaber: Heraeus Quarzglas GmbH & Co. KG, 63450 Hanau (DE); Institut für Photonische Technologien e.V., 07745 Jena (DE)
(72) Erfinder: LANGNER, Andreas, 63579 Freigericht (DE); KAYSER, Thomas, 04105 Leipzig (DE); SCHOETZ, Gerhard, 63741 Aschaffenburg (DE); SUCH, Mario, 06773 Graefenhainichen (DE); KIRCHHOF, Johannes, 07743 Jena (DE); GRIMM, Stephan, 07743 Jena (DE); REICHEL, Volker, 07743 Jena (DE)
(74) Vertreter: Staudt, Armin Walter
(86) Internationale Anmeldenummer: PCT/EP2008/062410
(87) Internationale Veröffentlichungsnummer: WO 2009/040287

(56) Entgegenhaltungen:
- EP-A- 0 281 282
- DE-A1-102004 006 017
- GB-A- 1 178 803
- US-A- 3 634 711
- US-A1- 2005 233 886
- RABINOVICH E M: "MULTICOMPONENT GLASSES FROM PARTICULATE GELS" JOURNAL OF NON-CRYSTALLINE SOLIDS, NORTH-HOLLAND PHYSICS PUBLISHING. AMSTERDAM, NL, Bd. 160, Nr. 1 / 02, 2. Juli 1993 (1993-07-02), Seiten 126-143, XP000385594 ISSN: 0022-3093

## Beschreibung

Die vorliegende Erfindung betrifft ein Verfahren zur Herstellung von co-dotiertem Quarzglas.

### Stand der Technik

Ein derartiges Verfahren ist in der DE 10 2004 006 017 A1 für die Herstellung von laseraktivem Quarzglas beschrieben. Zur Dotierung des Quarzglases mit Oxiden der Seltenerd- oder Übergangsmetalle wird eine "Pulver-Route" unter Einsatz eines hochreinen, homogen dotierten SiO₂-Granulates vorgeschlagen. Dabei wird von einer wässrigen Suspension ausgegangen, die SiO₂-Nanopartikel und Dotierstoffe enthält. Die Suspension wird durch allmählichen Entzug der Wassers granuliert. Die so erhaltenen sphärischen, porösen Granulatkörner aus dotiertem SiO₂ werden getrocknet und unter Einsatz eines Gasdrucksinterverfahrens zu einem Rohling aus dem dotierten, laseraktiven Quarzglas erschmolzen. Gemäß einem Ausführungsbeispiel wird ein mit Al₂O₃ und Nd₂O₃ dotiertes, laseraktives Quarzglas hergestellt. Dabei wird von einem wässrigen Schlicker ausgegangen, der mittels Fällungsreaktion erzeugte, nanoskalige SiO₂-Partikel enthält, und dem Ausgangsverbindungen für diese Dotierstoffe in Form wasserlöslicher Hydratverbindungen AlCl₃ x 6H₂O und NdCl₃ x 6H₂O zugegeben werden. Auf ähnliche Art und Weise wird auch ein mit Al₂O₃ und Yb₂O₃ dotiertes, laseraktives Quarzglas hergestellt.

Es hat sich jedoch gezeigt, dass mit dem bekannten Verfahren eine ausreichend homogene Verteilung der Dotierstoffe nicht ohne weiteres zu erreichen und die Weiterverarbeitung zu einer dämpfungsarmen Laserfaser nicht hinreichend reproduzierbar ist. Es kommt zu Dotierstoff-Konglomeraten, die beim Faserziehen eine Knötchenbildung verursachen, die zum Bruch der Faser oder zu einer unakzeptabel hohen optischen Dämpfung führt.

Es ist bekannt, dass dotiertes Quarzglas mit sehr homogener Dotierstoffverteilung mittels CVD-Verfahren herstellbar ist. Allerdings ist bei diesen Prozessen die Auswahl an Dotierstoffen auf diejenigen beschränkt, für die es leichtflüchtige Ausgangsverbindungen gibt, die sich über die Gasphase abscheiden lassen. Diese Voraussetzung ist für viele Elemente aus der Gruppe der Seltenen Erden und der Übergangsmetalle, die als Dotierstoff in laseraktivem Quarzglas eingesetzt werden, nicht erfüllt. Beim Heißchlorieren kann es zu Dotierstoffverlusten kommen.

Es wurde auch eine Verfahrensvariante vorgeschlagen, bei der eine mittels CVD-Verfahren abgeschiedene poröse SiO₂-Schicht nachträglich mit einer Lösung getränkt wird, die Seltenerdverbindungen enthält. Die so imprägnierte SiO₂-Schicht wird anschließend verglast. Das Verfahren ist jedoch zeitaufwändig und nur für die Herstellung von dotierten Quarzglaskörpern mit kleinen Abmessungen geeignet.

Ein weiteres Verfahren zur Herstellung von laseraktivem Quarzglas ist in der WO 2006/003253 A1 beschrieben. Dabei wird eine den Dotierstoff enthaltende Lösung verdampft oder zerstäubt und in einen Abscheidebrenner geleitet. In der Brennerflamme werden dotierte SiO₂-Partikel gebildet, die auf einem Substrat abgeschieden und verglast werden. Der Aufbauprozess läuft jedoch sehr langsam ab, da nur ein Bruchteil der SiO₂-Partikel verglast wird. Die Herstellung von Seltenerd-dotiertem Quarzglas ist daher ebenfalls zeitaufwändig und kostenintensiv.

Für die Herstellung von Vorformen für optische Anwendungen werden häufig auch Methoden eingesetzt, die auf dem so genannten Sol-Gel-Prozess beruhen. Diese Verfahren gewährleisten eine hohe Reinheit, erfordern jedoch andererseits häufig lange Prozesszeiten. Der Sol-Gel-Prozess beruht auf einer Polykondensationsreaktion und führt zur Ausbildung sehr feiner, ein Gerüst bildender Partikel, die auch eine homogene Dotierstoffverteilung aufweisen können. Allerdings erweist sich die Weiterverarbeitung des so hergestellten Materials zu einem dichten, blasenfreien Quarzglas infolge der großen Oberfläche als problematisch, so dass häufig die erforderlichen Materialqualitäten nicht erreicht werden.

Beispielsweise wird in der EP 0 281 282 A1 zur Herstellung eines mit Fluor dotierten Quarzglases über die "Sol-Gel-Route" vorgeschlagen als Ausgangsverbindung für den Dotierstoff NH₄F einzusetzen, das einer ammoniakalischen TEOS-Lösung mit einem pH-Wert von 11 hinzugefügt wird. Nach der Polykondensationsreaktion wird ein Si02-Körper erhalten, der mit 1 Gew.-% Fluor dotiert ist.

Bei dem aus der WO 2007/017454 A1 bekannten Sol-Gel-Verfahren zur Herstellung eines mit Aluminium dotierten Quarzglases über die "Sol-Gel-Route" wird in einem Zwischenschritt ein poröses Aquagel erhalten. Dem Aquagel wird anschließend eine den Dotierstoff in Form eines gelösten Salzes Al(OH)₃ x 9 H₂O. enthaltende Flüssigkeit im Kreislauf zugeführt. Durch die Zugabe von Ammoniak wird der pH-Wert der Flüssigkeit von 5 gebracht, was eine Immobilisierung des Dotierstoffs im porösen Aquagel bewirkt.

Es ist weiterhin aus US-A- 3 634 711 bekannt ein lumineszierendes Quarzglas herzustellen, das zur Aktivierung mit Seltenerdmetallen dotiert ist. Es wird eine Suspension aus Flüssigkeit und SiO₂ hergestellt, in der der oxidische Dotierstoff in einer lösbaren Form enthalten ist und aus der er anschließend ausgefällt wird. Beim Einsatz von Wasser als Suspensionsmittel wird vorgeschlagen, das Oxid oder ein Hydroxid des Dotierstoffs durch die Zugabe einer Lauge auszufällen. Als SiO₂-Ausgangsmaterial wird feinteiliges SiO₂-Pulver eingesetzt (Cab-O-Sil). Gemäß Example 1 und Example 4 wird eine wässrige Lösung aus SiO₂ und Lanthannitrat hergestellt. Dieser Lösung wird Ammoniak zugegeben und dadurch Lanthanoxid ausgefällt, das sich auf der Oberfläche der SiO₂-Pulverteilchen ablagert. Die Flüssigkeit wird verdampft und ein Zwischenprodukt aus SiO₂-Teilchen und Teilchen des Dotierstoffs erhalten. Das Zwischenprodukt wird zu einem Zylinder gepresst, getrocknet und durch Sintern bei 1750 °C unter Vakuum verglast. Bei Example 2 wird zusätzlich zu Lanthannitrat als weiterer Dotier-Ausgangsstoff Praseodymnitrat eingesetzt.

Auch in GB-A-1 178 803 ist ein Verfahren zur Herstellung von dotiertem Quarzglas offenbart. Hier wird mit einem Schlickerverfahren gearbeitet, wobei es durch Zugabe einer wässrigen Ammoniaklösung zur Ausfällung gelöster Dotierstoffe kommt.

### Technische Aufgabenstellung

Es ist daher Ziel der vorliegenden Erfindung, ein wirtschaftliches Verfahren zur Herstellung von co-dotiertem Quarzglas anzugeben, insbesondere von laseraktivem Quarzglas, das hinsichtlich der Homogenität der Dotierstoffverteilung verbessert ist.

Diese Aufgabe wird erfindungsgemäß einerseits dadurch gelöst, indem eine Suspension bereitgestellt wird, die SiO₂-Teilchen in einer wässrigen Flüssigkeit enthält und der eine Ausgangsverbindung für einen ersten Dotierstoff und eine Ausgangsverbindung für einen zweiten Dotierstoff zugeführt werden, wobei mindestens ein Teil der Teilchen des ersten Dotierstoffs und des zweiten Dotierstoffs oder der Teilchen von Vorläufersubstanzen derselben in der Suspension als Präzipitat einer Fällungsreaktion der Ausgangsverbindungen erzeugt werden, und dass die Flüssigkeit unter Bildung eines co-dotierten Zwischenprodukts, das Teilchen des ersten Dotierstoffs und Teilchen des zweiten Dotierstoffs oder Teilchen von Vorläufersubstanzen der Dotierstoffe enthält, entfernt wird, und aus dem co-dotierten Zwischenprodukt durch Sintern das co-dotierte Quarzglas gebildet wird, wobei der Suspension die Ausgangsverbindungen von erstem und zweitem Dotierstoff in gelöster Form zugegeben werden, und dass die Fällungsreaktion als pH-Wert-gesteuerte Mischfällung herbeigeführt wird, indem der pH-Wert der Suspension derart eingestellt ist, dass bei der Zugabe der Ausgangsverbindungen Teilchen des ersten Dotierstoffs und Teilchen des zweiten Dotierstoffs oder von deren Vorläufersubstanzen unmittelbar ausfallen.

Das dotierte Quarzglas gemäß der Erfindung enthält einen ersten und einen zweiten Dotierstoff in möglichst homogener Verteilung. Um dies zu erreichen, wird bei der Herstellung des dotierten Quarzglases von einer Suspension ausgegangen, die neben SiO₂ in Form diskreter amorpher Teilchen mindestens jeweils eine Ausgangsverbindung für einen ersten und einen zweiten Dotierstoff oder Vorläufersubstanzen derselben enthält. Die "Ausgangsverbindungen" enthalten Dotierstoffe oder Vorläufersubstanzen. Im einfachsten Fall handelt es sich bei den Ausgangsverbindungen um die Dotierstoffe selbst oder um deren Vorläufersubstanzen.

Vermahlen). Der Einsatz vorab erzeugter SiO₂-Feststoffteilchen ermöglicht eine wirtschaftliche Herstellung von dotiertem Quarzglas (im Unterschied zu den so genannten "Sol-Gel-Verfahren").

Unter vorab erzeugten "diskreten Teilchen" werden hier sowohl SiO₂-Einzelteilchen verstanden, als auch poröse Si02-Teilchenaggregate, die aus miteinander verwachsenen Primärteilchen bestehen. Wesentlich für eine homogene Verteilung der Dotierstoffe ist in jedem Fall, dass die "diskreten Teilchen" innerhalb der Suspension frei zugänglich sind und somit einen ungehinderten Stoffaustausch ermöglichen. Bei porösen Aggregaten aus Si02-Primärteilchen wird dies beispielsweise gewährleistet, wenn die Primärteilchen sphärische Nanoteilchen sind, wie sie etwa bei CVD-Abscheideverfahren erhalten werden. Die Größen der Primärteilchen reichen von 5 nm bis 300 nm, und liegen typischerweise bei weniger als 100 nm. Die mittleren Größen der daraus gebildeten, porösen Si02-Teilchenaggregate liegen im Bereich von 1 µm bis 200 µm, typischerweise um 10 µm.

Der wesentliche Unterschied zu der eingangs beschriebenen "Suspensions-Methode" liegt in der Art und Weise der Bereitstellung und Erzeugung der Dotierstoffteilchen in der Suspension. Beim bekannten Verfahren werden der Suspension Ausgangsverbindungen der Dotierstoffe in löslicher Form zugeführt. Infolge der Überschreitung des jeweiligen Löslichkeitsproduktes beim Trocknen der Suspension fallen dann Dotierstoffe oder deren Vorläufersubstanzen nach und nach aus. Dadurch fallen die Präzipitate jedoch als undefinierte Produkte und örtlich eher zufällig aus. Außerdem können nicht ausgefällte Ionen in poröse Si02-Partikel eindiffundieren, so dass sich letztlich eine nicht homogene Dotierstoffverteilung einstellt. Demgegenüber werden beim erfindungsgemäßen Verfahren die Dotierstoff-Teilchen (oder Teilchen der Vorläufersubstanz) infolge einer Fällungsreaktion gebildet, die durch den pH-Wert der Suspension gesteuert ist. Entweder wird der pH-Wert der Suspension so eingestellt, dass bei einer Zugabe der Ausgangsverbindungen unmittelbar die Fällungsreaktion einsetzt, so dass sich Feststoffteilchen der Dotierstoffe (oder von Vorläufersubstanzen) in der Suspension bilden, oder der pH-Wert der Suspension wird so verändert, dass in der Suspension anfänglich gelöste Ausgangsverbindungen der Dotierstoff in Teilchenform ausfallen.

Die Fällung führt in der Regel zur Bildung besonders feiner Teilchen der Dotierstoffe (oder der Vorläufersubstanzen) in der Suspension, was zum einen die Homogenität der Dotierstoff-Verteilung fördert, und zum anderen zur Stabilisierung der Suspension beiträgt. Wesentlich ist dabei, dass die Dotierstoff-Teilchen in der noch flüssigen Suspension homogen und definiert ausfallen und an den vorhandenen, diskreten und homogen verteilten SiO₂-Partikeln unmittelbar adsorbiert und dadurch immobilisiert werden können.

Dadurch liegen die Dotierstoffe auch nach Entzug der Flüssigkeit - im Zwischenprodukt aus dotiertem SiO₂- in feiner, homogener Verteilung vor. Um eine Sedimentation oder eine Agglomeration von Dotierstoff-Teilchen zu vermeiden, wird die Suspension nach Einleitung der Fällungsreaktion stabilisiert, etwa durch fortwährende Bewegung.

Der "Dotierstoff" umfasst mindestens eine Substanz, die dem Quarzglas zur Erzielung gewünschter Eigenschaften absichtlich hinzugefügt wird. Unter einer "Vorläufersubstanz" eines Dotierstoffes wird hier eine Substanz verstanden, die in einem späteren Stadium des Verfahrens infolge einer chemischen Reaktion oder durch Verändern ihres Oxidationszustandes zu dem eigentlichen Dotierstoff umgewandelt wird. Sofern im Folgenden von "Dotierstoff" die Rede ist, so soll dieser Begriff der Einfachheit halber auch eine "Vorläufersubstanz" umfassen, sofern nichts anderes ausdrücklich gesagt ist oder sich aus den Umständen ergibt.

Unter "Quarzglas" wird hier auch ein hochkieselsäurehaltiges Glas mit einem SiO₂-Anteil von mindestens 70 Gew.-% verstanden.

Die SiO₂-Teilchen der Suspension liegen in undotierter oder in dotierter Form vor. Bei vordotierten SiO₂-Teilchen ist eine homogene Verteilung der Dotierstoffe zu gewährleisten. Dies kann beispielsweise durch die üblichen CVD - Abscheideverfahren mittels Flammenhydrolyse oder Oxidation von Ausgangsverbindungen, die Si und den Dotierstoff enthalten, erreicht werden, wobei diese Methode aus wirtschaftlichen Erwägungen, wie eingangs erwähnt, nur für die Vordotierung ausgewählter Dotierstoff wie Cl, F, B, P, Ge, Sn oder Ti leicht möglich ist. Die Ausgangsverbindungen werden der Suspension in der Regel in gelöster Form zugeführt. Anstatt durch Zuführen der Ausgangsverbindungen zur Suspension und der Erzeugung des Präzipitats in der Suspension kann in kinematischer Umkehr auch die Suspension den gelösten Ausgangsverbindungen zugeführt, und das Präzipitat in der Lösung der Ausgangsverbindungen erzeugt werden. Diese Verfahrensvariante ist jedoch nicht bevorzugt. Das aus der Suspension erhaltene Zwischenprodukt fällt je nach Art des Trocknungsprozesses als Feststoff in Form von feinteiligem SiO₂-Pulver, als SiO₂-Granulat aus Agglomeraten von feinteiligem SiO₂ oder als poröser SiO₂-Grünkörper an.

Das erfindungsgemäße Verfahren setzt zur Herstellung des co-dotierten Quarzglases eine gegenüber dem Stand der Technik modifizierte "Suspensions-Methode" mit einer definierten Lösung, Fällung und Immobilisierung der Dotierstoffe an den vorab erzeugten, diskreten SiO₂-Teilchen ein, die einerseits die Nachteile des bekannten Verfahrens hinsichtlich inhomogener Dotierstoffverteilung und Knötchenbildung beim Faserziehen vermeidet, und andererseits dessen Vorteile in Bezug auf Wirtschaftlichkeit und Variabilität der Formgestaltung nutzt.

Das Verfahren ist insbesondere für die Herstellung von co-dotiertem Quarzglas geeignet, bei dem die Anforderungen an die Homogenität der Dotierstoffverteilung sehr hoch sind. Dies ist im Allgemeinen bei Anwendungen im Bereich der Optik der Fall. Als Beispiele hierfür seien Quarzgläser für passive optische Lichtwellenleiter, Lasergläser und Filtergläser genannt. Weiterhin ist das erfindungsgemäße Verfahren auch zur Herstellung von dotiertem Quarzglas mit besonderen elektrischen oder magnetischen Eigenschaften, zur Herstellung so genannter "Stressstäbe" für den Einsatz in Vorformen für polarisationserhaltende optische Fasern oder zur Herstellung von Quarzglas mit vorgegebenem thermischem Ausdehnungskoeffizienten, wie etwa eines "Null-Ausdehungsglases", geeignet.

Ein Haupt-Anwendungsgebiet für das erfindungsgemäße Verfahren ist die Herstellung von laseraktivem Quarzglas. Dieses enthält Dotierstoffe, die eine Verstärkung von Laserstrahlung im Wirtsmaterial Quarzglas bewirken. Dabei handelt es sich in der Regel um Seltenerd-Kationen (Lanthaniden) und/oder um Kationen der sogenannten Übergangsmetalle. Häufig werden weitere Dotierstoffe - wie etwa Aluminium, Phosphor und Bor - zur Einstellung der Viskosität und des Brechungsindex des Quarzglases eingebracht. Dabei werden an die Homogenität der Dotierstoff-Verteilung besonders hohe Anforderungen gestellt, um Entglasung und Knötchenbildung zu vermeiden und damit einhergehend eine möglichst hohe Verstärkungsleistung und eine geringe Dämpfung der zu verstärkenden Laserstrahlung zu erzielen.

Insbesondere für die zuletzt genannte Anwendung wird in der Regel Quarzglas benötigt, das zwei oder mehr Dotierstoffe enthält. Für die Herstellung eines derartigen, co-dotierten Quarzglas nach dem erfindungsgemäßen Verfahren werden der Suspension eine Ausgangsverbindung für einen ersten Dotierstoff und eine Ausgangsverbindung für einen zweiten Dotierstoff zugeführt, wobei mindestens ein Teil der Teilchen des ersten Dotierstoffs und des zweiten Dotierstoffs oder der Teilchen von Vorläufersubstanzen derselben in der Suspension als Präzipitat der Fällungsreaktion der Ausgangsverbindungen erzeugt werden, und wobei die Flüssigkeit unter Bildung eines co-dotierten Zwischenprodukts, das Teilchen des Dotierstoffs und Teilchen des zweiten Dotierstoffs oder Teilchen von Vorläufersubstanzen der Dotierstoffe enthält, entfernt wird, und aus dem co-dotierten Zwischenprodukt durch Sintern das co-dotierte Quarzglas gebildet.

Wesentlich ist hier, dass die Teilchen der Dotierstoffe oder von deren Vorläufersubstanzen in der flüssigen Suspension homogen und definiert ausfallen und an den vorhandenen SiO₂-Partikeln unmittelbar adsorbiert und dadurch immobilisiert werden. Dadurch liegen die Dotierstoffe auch nach Entzug der Flüssigkeit - im Zwischenprodukt aus dotiertem SiO₂- in feiner, homogener Verteilung vor. Auf diese Art und Weise wird eine homogene Verteilung der Dotierstoffe im gesinterten Quarzglas erreicht.

Die Suspension wird zunächst ohne die Dotierstoffe homogenisiert und der homogenisierten Suspension werden anschließend Ausgangsverbindungen von erstem und zweitem Dotierstoff in gelöster Form zugegeben, wobei die pH-Wert-gesteuerte Fällungsreaktion als Mischfällung herbeigeführt wird, indem der pH-Wert der Suspension derart eingestellt ist, dass bei der Zugabe der Ausgangsverbindungen Teilchen des ersten Dotierstoffs und Teilchen des zweiten Dotierstoffs oder von deren Vorläufersubstanzen unmittelbar ausfallen.

Die Ausgangsverbindungen der Dotierstoffe werden hierbei der Suspension in Form einer oder mehrere Dotierstofflösungen zugeführt. Die Zufuhr in einer einzigen Dotierstofflösung ist zu bevorzugen, sofern sich die Ausgangsverbindungen der Dotierstoffe zusammen in Lösung bringen lassen. Der pH-Wert der Suspension wird so eingestellt, dass bei gleichzeitiger Zugabe der Ausgangsverbindung von erstem und zweitem Dotierstoff unmittelbar die Fällungsreaktion für beide Dotierstoffe einsetzt. Bei dieser "Mischfällung" fallen der leichter lösliche Dotierstoff und der schwerer lösliche Dotierstoff gleichzeitig und gemeinsam aus und bilden dadurch im Idealfall Mischverbindungen, wie beispielsweise Mischhydroxide, die an den SiO₂-Teilchen adsorbieren. Dadurch ergeben sich eine besonders homogene Verteilung der Dotierstoffe und ein definiertes und homogenes Präzipitat, auch wenn sich die Löslichkeitsprodukte von erstem und zweitem Dotierstoff deutlich unterscheiden. Die Ausgangsverbindungen für den ersten und den zweiten Dotierstoff können auch in Form einer gemeinsamen chemischen Verbindung bereitgestellt werden.

Vorteilhafterweise wird eine wässrige Suspension bereitgestellt, homogenisiert und auf einen pH-Wert oberhalb von 7, vorzugsweise oberhalb von 9, eingestellt.

Der pH-Wert der Suspension wird - in der Regel durch Zugabe von Hilfsstoffen - in den alkalischen Bereich verschoben und dort gehalten. Der pH-Wert ist so alkalisch eingestellt, dass sich nach Zugabe der Ausgangsverbindungen für die Dotierstoffe unmittelbar jeweils schwer lösliche ("unlösliche") Verbindungen, wie etwa Hydroxide, Karbonate oder Phosphate, bilden. Gegebenenfalls muss die Suspension geeignete Fällungsmittel enthalten, wie etwa Ammoniumcarbonat oder Ammoniumcarbamat, die beide zum Beispiel für eine kombinierte Fällung von Karbonaten und Hydroxiden besonders geeignet sind. Je höher der pH-Wert der Suspension eingestellt wird, umso sicherer wird das Löslichkeitsprodukt der jeweiligen schwer löslichen Verbindungen überschritten und umso sicherer kommt es zu der gewünschten Mischfällung. Außerdem zeigt eine Suspension von SiO₂-Teilchen bei einem derartigen pH-Wert eine hohe Stabilität, da interpartikuläre abstoßende Kräfte zwischen den SiO₂-Teilchen einer Sedimentation entgegen wirken.

Bei sehr hohen pH-Werten oberhalb von 12, wie sie durch Alkalihydroxide einstellbar sind, kann das Löslichkeitsprodukt von an und für sich schwer löslichen Verbindungen jedoch wieder unterschritten werden. Außerdem erfordern sehr hohe pH-Werte den Einsatz von Substanzen, die zu unerwünschten Verunreinigungen des co-dotierten Quarzglases führen würden. Daher wird der pH-Wert der Suspension vorzugsweise bei maximal 12, besonders bevorzugt bei maximal 10, gehalten, wobei die Einstellung und Änderung des pH-Werts der Suspension durch Zugabe alkalifreier Säuren oder Basen durchgeführt wird.

Der Einsatz alkalifreier Säuren oder Basen zur pH-Wert-Einstellung gewährleistet eine möglichst geringe Belastung des herzustellenden Quarzglases mit Verunreinigungen und Kristallpromotoren.

Im Hinblick darauf hat es sich besonders bewährt, als alkalifreie Base Stickstoffhydride, insbesondere Ammoniak, Ammoniumsalze, Hydrazin, oder Amine, wie Hydroxylamin, einzusetzen.

Ammoniak wirkt als mittelstarke Base und ermöglicht in wässriger Lösung einen pH-Wert von maximal etwa 10, was zur Bildung schwerlöslicher Hydroxidverbindungen der üblichen Dotierstoffe genügt.

Bei der Zugabe der Ausgangsverbindung kann es zu einer Veränderung des pH-Wertes der Suspension kommen. Um dies zu kompensieren, insbesondere um einem zu starken Abfall des pH-Wertes entgegenzuwirken, hat es sich bewährt, wenn der pH-Wert der Suspension beim Zuführen der gelösten Ausgangsverbindung durch Zugabe eines Hilfsstoffes gehalten oder eingestellt wird.

In dem Zusammenhang hat es sich auch als günstig erwiesen, wenn die Suspension einen Überschuss an Ammoniak enthält, der zur Abpufferung des pH-Wertes beiträgt.

Alternativ oder ergänzend dazu kann das Volumen der gelösten Ausgangsverbindung möglichst gering gehalten werden, vorzugsweise liegt das Volumenverhältnis der Lösung der Ausgangsverbindung zu demjenigen der Suspension bei weniger als 1.

Außerdem hat es sich als vorteilhaft erwiesen, bei der Zugabe der Ausgangsverbindungen den Flüssigkeitsgehalt der Suspension durch Zugabe von Wasser, Ammoniak und/oder wässrigen Lösungen zu erhöhen.

Infolge der Fällungsreaktion steigt der Feststoffgehalt der Suspension rasch an. Die Verdünnung der Suspension durch Zugabe weiterer Flüssigkeit, insbesondere in Form von Wasser, Ammoniak und/oder wässrigen Lösungen trägt zur Stabilisierung der Suspension und zum Vermeiden einer vorzeitigen Gelierung bei.

Bei der Zufuhr der Ausgangsverbindung zur Suspension kann es zu einer lokalen Übersättigung mit der Ausgangsverbindung und damit zu einer inhomogenen Ausfällung kommen. Um dem entgegenzuwirken, wird eine Verfahrensweise bevorzugt, bei der die Suspension während der Zugabe der Ausgangsverbindung des Dotierstoffs mechanisch bewegt wird.

Durch fortwährende Bewegung zumindest im Anfangsstadium der Ausfällung, bevorzugt während der gesamten Fällungsreaktion und darüber hinaus, wird die Verteilung des Präzipitats homogener und eine Sedimentation wird vermieden. Die Bewegung der Suspension erfolgt dabei mittels einer der bekannten und geeigneten Methoden, wie Rühren, Verwirbeln, Schütteln oder den Einsatz von Ultraschall.

In dem Zusammenhang hat es sich als besonders vorteilhaft erwiesen, wenn die Ausgangsverbindung in einer Lösung vorliegt, die der Suspension tropfenweise zugeführt wird, wobei die Suspension vor jeder Zugabe eines Tropfens mechanisch bewegt wird.

Die Zugabe der gelösten Ausgangsverbindung oder der gelösten Ausgangsverbindungen erfolgt hierbei nicht kontinuierlich, sondern tropfenweise, vorzugsweise zeitlich gesteuert nach vorgegebenen Zeitabständen. Der Umfang der mechanischen Bewegung der Suspension und der zeitliche Abstand der Zutropfung sind dabei so aufeinander abgestimmt, dass jeder Tropfen in eine möglichst homogene Suspension gelangt. Es hat sich gezeigt, dass dadurch eine besonders homogene Verteilung des Dotierstoffs oder der Dotierstoffe erreichbar ist.

Alternativ oder ergänzend dazu hat es sich als vorteilhaft erwiesen, die Suspension und die Ausgangsverbindung über durchflussgesteuerte Zufuhr in einem Reaktionsraum zusammenzuführen.

Dabei handelt es sich um eine kontinuierliche Verfahrensweise, die eine hohe Produktivität bei gleichbleibender Qualität ermöglicht. Bei dem Reaktionsraum handelt es sich vorzugsweise um einen Durchflussreaktor, in dem auch kleinere Mengen des Reaktanten definiert zusammengeführt und zur Reaktion gebracht werden können.

Die Suspension enthält vorzugsweise Wasser und mindestens einen weiteren Hilfsstoff.

Durch Zugabe von Hilfsstoffen, vorzugsweise Stickstoffhydriden - wie etwa NH₃, (NH₄)₂CO₃, Ammoniumcarbamat, Amine, Hydroxylamin, Hexamethylentetramin, Hydrazin, Ammoniumacetat oder organischer Lösungsmittel - ist zum einen der pH-Wert der Suspension einstellbar, und gleichzeitig können durch die Zugabe von Hilfsstoffen andere Eigenschaften der Suspension, wie Oberflächenspannung, Viskosität oder Suspensionsstabilität, verbessert werden, was sich auf eine homogene Verteilung des Dotierstoffs vorteilhaft auswirkt.

Die oben angegebene Aufgabe wird erfindungsgemäß andererseits auch dadurch gelöst, indem eine auf einen ersten niedrigeren pH-Wert eingestellte Suspension bereitgestellt wird, die SiO₂-Teilchen sowie Ausgangsverbindungen für einen ersten und für einen zweiten Dotierstoff in jeweils gelöster Form in einer wässrigen Flüssigkeit enthält, und dass anschließend der pH-Wert der Suspension auf einen zweiten, höheren Wert erhöht wird, wobei Teilchen des ersten Dotierstoffs und Teilchen des zweiten Dotierstoffs oder von deren Vorläufersubstanzen in der Suspension als Präzipitat einer pH-Wert-gesteuerte Umkehrfällung ausfallen, und dass die Flüssigkeit unter Bildung eines dotierten Zwischenprodukts, das Teilchen des ersten und zweiten Dotierstoffs oder Teilchen von Vorläufersubstanzen des ersten und zweiten Dotierstoffs enthält, entfernt wird, und aus dem dotierten Zwischenprodukt durch Sintern das dotierte Quarzglas gebildet wird, wobei als erster Dotierstoff Ytterbiumoxid und als zweiter Dotierstoff Aluminiumoxid eingesetzt werden.

Ein Vorteil dieser Verfahrensweise besteht darin, dass sich die gelöste Ausgangsverbindung des Dotierstoffs in der gesamten Suspension und insbesondere auch in etwaigen porösen SiO₂-Teilchen oder in SiO₂-Teilchenaggregaten besonders homogen verteilt. Dies ermöglicht eine besonders homogene Verteilung der Ausgangsverbindungen in der Suspension vor dem Einleiten der Fällungsreaktion durch Erhöhen des pH-Wertes. Durch Erhöhen des pH-Wertes der Suspension fallen der erste Dotierstoff und der zweite Dotierstoff aus.

Das alternative erfindungsgemäße Verfahren ist besonders geeignet zur Herstellung von dotiertem Quarzglas zum Einsatz in laseraktiven optischen Komponenten, wie etwa optischen Lichtwellenleitern. In dem Zusammenhang wird als erster Dotierstoff Ytterbiumoxid und ergänzend wird als zweiter Dotierstoff Aluminiumoxid eingesetzt.

Je nach dem spezifischen Löslichkeitsprodukt des Dotierstoffs kann es dabei zu einer zeitlich gestaffelten, einer temperaturgestaffelten oder einer gleichzeitigen Ausfällung der Dotierstoffe kommen. Die Erhöhung des pH-Wertes kann durch Zugabe einer Base zur Suspension erreicht werden. Im Bereich der Zugabe der Base kann es jedoch zu einer lokalen Übersättigung und zu einer verstärkten Ausfällung und damit einhergehend zu einer inhomogenen Dotierstoffverteilung kommen.

Diesen Nachteil vermeidet eine bevorzugte Verfahrensvariante, bei der die Erhöhung des pH-Wertes durch Erhöhung der Temperatur der Suspension bewirkt wird, indem eine bei niedrigerer Temperatur in der Suspension als Säure wirkende Verbindung durch Erhöhung der Temperatur unter Freisetzung einer in der Suspension als Base wirkenden Substanz zersetzt wird.

Die thermische Zersetzung der als Säure wirkenden Verbindung erfolgt im Idealfall gleichzeitig und gleichmäßig innerhalb des Volumens der Suspension. Dadurch werden lokale Übersättigungen und damit einhergehende Konzentrationsunterschiede der Dotierstoffverteilungen vermeiden.

Als eine bei niedrigerer Temperatur in der Suspension als Säure wirkende Verbindung wird vorzugsweise Hexamethylentetramin eingesetzt.

Hexamethylentetramin (Urotropin) ist ein Kondensationsprodukt von Ammoniak und Formaldehyd. Bei Raumtemperatur zeigt eine wässrige Suspension von Hexamethylentetramin einen alkalischen pH-Wert, der durch Zugabe einer das System abpuffernden Säure, wie etwa NH₄Cl auf etwa 5 eingestellt werden kann, so dass Hydroxide oder andere schwer lösliche Verbindungen der meisten Dotierstoffe nicht ausfallen. Bei Erwärmung wird Ammoniak freigesetzt und es kommt es zu einer Erhöhung des pH-Wertes, der zu einer gleichmäßigen Ausfällung der Dotierstoffe in Form von Hydroxidverbindungen oder anderen Fällungsprodukten führt.

Unter dem Begriff "Seltene Erden" werden hier die Lanthaniden (einschließlich Lanthan) sowie Sc und Y zusammengefasst. Für derartige Dotierstoffe findet der Fachmann leicht Ausgangsverbindungen und dafür geeignete Lösungsmittel. Als Beispiel seien Chloride wie YbCl₃ und ErCl₃ und Ammoniumnioboxalat genannt. Der Co-Dotierstoff oder die Co-Dotierstoffe dienen dazu, die mechanischen und optischen Eigenschaften des dotierten Quarzglases zu verbessern oder anzupassen, wie zum Beispiel Brechungsindex, Viskosität, Entglasungsneigung, Blasenbildung, thermischen Ausdehnungskoeffizienten, Materialhomogenität, optische Materialdämpfung, induzierte Dämpfung durch Materialschädigung, optische Absorptionseigenschaften, Transmission, Fluoreszenzlebensdauer, Materialalterung oder Photodarkening.

Auch für die als Co-Dotierstoffe genannten Oxide findet der Fachmann leicht Ausgangsverbindungen und dafür geeignete Lösungsmittel. Als Beispiel seien AlCl₃, (NH₄)₂B₄O₇ x 4H₂O), H₃PO₄, HF, NH₄F genannt.

Die Dotierstoffkonzentrationen der Oxide von Ytterbium und Aluminium können bis 20 Gew.-% betragen.

Im Hinblick auf eine homogene Fällungsreaktion hat es sich als günstig erwiesen, wenn der Feststoffgehalt der Suspension bei der Fällung des ersten oder zweiten Dotierstoffs weniger als 80 Gew.-%, vorzugsweise weniger als 70 Gew.-%, beträgt.

Ein geringer Feststoffgehalt und die damit einhergehende geringe Viskosität der Suspension tragen zu einer schnellen und gleichmäßigen Verteilung der Ausgangsverbindung in der Suspension und des sich daraus bildenden Präzipitats bei. Feststoffgehalte von weniger als 40 Gew.-% werden nicht bevorzugt, da eine homogene Dotierstoffverteilung in der Suspension in dem vergleichsweise großen Volumen erschwert. Im Fall einer temperaturgesteuerten Fällung wird außerdem die Einstellung einer gleichmäßigen Temperaturverteilung innerhalb des größeren Volumens erschwert. Hohe Verdünnungen werden darüber hinaus auch aus wirtschaftlichen Erwägungen nicht bevorzugt.

Nach Abschluss (oder schon während der Fällungsreaktion) wird der Suspension die Flüssigkeit entzogen (Trocknen). Die Reduzierung des Flüssigkeitsgehalts der Suspension erfolgt hierbei vorzugsweise möglichst rasch, so dass eine Sedimentation und die Ausbildung eines Verteilungsgradienten des Präzipitats vermieden werden, zum Beispiel durch Gefriertrocknung oder mittels eines Granulators.

Es hat sich bewährt, wenn vor dem Sintern des dotierten SiO₂-Zwischenprodukts ein Verdichten des Zwischenprodukts unter einer Verdichtungsatmosphäre bei einer Temperatur unterhalb der Sintertemperatur erfolgt.

Durch das Vor-Verdichten des co-dotierten Zwischenprodukts wird der Einfluss der Atmosphäre in nachfolgenden Heißbehandlungsprozessen minimiert. So kann es beispielsweise vorkommen, dass beim Sintern prozessbedingt eine Sinteratmosphäre einzustellen ist, die mit dem Dotierstoff reagiert und sich auf dessen Oxidationszustand oder auf dessen Verteilung im Zwischenprodukt ungünstig auswirken würde. Dieser Einfluss der Sinteratmosphäre kann durch eine vollständige Kapselung des Zwischenprodukt verhindert werden oder - vorzugsweise - dadurch, dass das Zwischenprodukt in Form einer porösen Pulverschüttung oder eines porösen Grünkörpers mit einem verdichteten Außenbereich versehen wird, wobei der verdichtete Außenbereich bei niedrigerer Temperatur und unter einer Verdichtungsatmosphäre erzeugt wird, die sich auf den Dotierstoff und dessen Verteilung nicht nachteilig auswirken.

Beispielsweise ist es bei einer Dotierung von laseraktivem Quarzglas mit Ytterbiumoxid häufig erwünscht, dass das Ytterbium als Yb³⁺ vorliegt, und nicht in reduzierter Form von zweiwertigem Yb²⁺, da im letzt genannten Fall eine starke Dämpfungszunahme und eine Lebensdauereinschränkung des für die Laseranwendung wichtigen Fluoreszenzüberganges beobachtet werden. Durch die Verdichtung des Außenbereichs des noch porösen Zwischenprodukts vor dem Sintern unter einer oxidierend wirkenden Verdichtungsatmosphäre kann der Dotierstoff Ytterbiumoxid in den dreiwertigen Oxidationszustand gebracht werden, und der verdichtete Außenbereich des Zwischenprodukts schützt vor einer etwaigen reduzierend wirkenden Atmosphäre beim Sintern.

Das Entfernen der Flüssigkeit vor dem Sintern (im Folgenden auch als "Trocknen" bezeichnet) erfolgt anhand der bekannten Methoden, wie etwa unter Einsatz eines Rotationsverdampfers, eines Granulators, eines Gefriertrockners, eines Mikrowellentrockners oder einer Saug- oder Membranform. Das Trocknen kann mit einer Verschiebung des pH-Wertes einhergehen und zu einer Agglomeration der Dotierstoff-Teilchen führen. Resultat des Trocknungsprozesses ist ein Zwischenprodukt in Form von SiO₂-Pulver, SiO₂-Granulat oder eines SiO₂-Grünkörpers, das den mindestens einen Dotierstoff oder eine Vorläufersubstanz desselben in fein verteilter Form und in gleichmäßiger Verteilung enthält.

Bei einer bevorzugten Verfahrensvariante geht dem Trocknen der Suspension ein Verfahrensschritt voraus, bei dem in der Suspension enthaltene Feststoffe und die Flüssigkeit mittels eines mechanischen Trennverfahrens separiert werden.

Die mechanische Trennung von Feststoff und Flüssigkeit erfolgt im einfachsten Fall durch Zentrifugieren. Dadurch kann eine Ausfällung gelöster Hilfsstoffe verhindert werden, die ansonsten beim Trocknen in den dotierten SiO₂-Feststoff gelangen und die sich bei nachfolgenden Verfahrensschritten nachteilig auswirken würden. Insbesondere ist hier NH₄Cl zu nennen, das durch Bildung flüchtiger Metallchloride bei hohen Temperaturen zu einem Verlust an Dotierstoff führen kann.

Die gelösten Hilfsstoffe bleiben in der abgetrennten Flüssigkeit gelöst und werden mit dieser entfernt. Diese "Waschprozedur" kann mehrmals wiederholt werden. Anschließend wird die Feststoffphase wieder in eine homogene Suspension verbracht und unter Bildung des dotierten SiO₂-Feststoffs getrocknet. Diese Verfahrensvariante erweist sich insbesondere bei hohen Dotierstoff-Konzentrationen als hilfreich, um Dotierstoffverluste zu vermeiden.

Vorteilhafterweise weisen die SiO₂-Teilchen Teilchengrößen im Bereich zwischen 0,5 und 100 µm, besonders bevorzugt zwischen 1 µm und 10 µm auf.

Die in der Suspension vorliegenden, diskreten amorphen SiO₂-Teilchen mit Teilchengrößen im Größenbereich zwischen 0,5 µm und 100 µm sind einerseits groß genug, um eine wirtschaftliche Herstellung von Quarzglas zu ermöglichen, und andererseits klein genug, um eine homogene Verteilung der Dotierstoffs zu gewährleisten.

Dabei haben sich SiO₂-Teilchen, die als Aggregate von SiO₂-Primärteilchen vorliegen als besonders günstig erwiesen, wobei die SiO₂-Primärteilchen im Bereich zwischen 5 nm und 300 nm den größten Volumenanteil ausmachen Diskrete, amorphe SiO₂-Teilchen in Form von Teilchenaggregaten lassen sich in ihrer Größe und Dichte so einstellen, dass einerseits eine wirtschaftliche Herstellung von Quarzglas, und andererseits ein ungehinderter Stoffaustausch in der Suspension zu den Primärpartikeln ermöglicht wird. Der ungehinderte Stoffaustausch gewährleistet eine homogene Verteilung des Dotierstoffs. Derartige Teilchen zeichnen sich durch eine spezifische Oberfläche (BET) im Bereich von 10 bis 500 m²/g aus, bevorzugt liegt die BET-Oberfläche im Bereich von 30 bis 70 m²/g. Vorzugsweise ist die Teilchengrößenverteilung durch einen D₅₀ -Wert von weniger als 50 nm gekennzeichnet. Die Teilchengrößen der Aggregate liegen vorzugsweise im Bereich zwischen 1 µm und 30 µm.

Außerdem hat es sich bewährt, wenn mindestens 80 Gew.-%, vorzugsweise mindestens 90 Gew.-% der SiO₂-Primärteilchen sphärisch ausgebildet sind.

Sphärische Teilchen erleichtern die Einstellung einer hohen Feststoffdichte, so dass Spannungen beim Trocknen und Sintern des Zwischenproduktes vermindert werden. Im Idealfall sind alle SiO₂-Primärteilchen sphärisch ausgebildet.

Der Einsatz von SiO₂-Teilchen, die aus einem durch CVD-Verfahren erzeugten SiO₂ bestehen, hat sich als besonders vorteilhaft erwiesen.

Derartige, synthetisch erzeugte SiO₂-Teilchen zeichnen sich durch eine hohe Reinheit aus. Der Verunreinigungsgrad des daraus erhaltenen Quarzglases liegt bei weniger als 1 Gew.-ppm.

Die Weiterverarbeitung des Zwischenprodukts erfolgt mittels Methoden, wie sie auch sonst für die Weiterverarbeitung von Pulver, Granulat oder Grünkörper üblich und geeignet sind. Geeignete Methoden umfassen:
- Eine Trocknung des Zwischenproduktes in einem Trockenschrank oder Ofen, wobei leicht flüchtige Verbindungen, wie zum Beispiel NH₄Cl, zersetzt oder sublimiert und aus dem Zwischenprodukt entfernt werden.
- Ein Pressen von Granulat oder Pulver zu einem Pressling, der danach wie ein SiO₂-Grünkörper weiterbehandelt wird.
- Ein weitergehendes Trocknen und Reinigen des Zwischenprodukts unter einer reaktiven Atmosphäre, wie etwa unter einer Chlor, Sauerstoff oder Wasserstoff enthaltenden, reaktiven Atmosphäre oder unter Vakuum.
- Eine Verglasung von Granulat oder Grünkörper in der Flammenschmelze oder im Gasdrucksinterofen. Bei der Flammenverglasung kann das Zwischenprodukt von einem evakuierten Hüllrohr umgeben sein, um zu vermeiden, dass verdampfende Partikel in die Umgebung gelangen und umgekehrt, Verunreinigungen aus der Umgebung in das zu verglasende Zwischenprodukt. Bei der Verglasung im Gasdrucksinterofen kann das Zwischenprodukt von einer Schüttung aus Quarzglaskörnung umgeben werden. Die Quarzglaskörnung dient dabei für das Zwischenprodukt als Schutzmantel gegen die in der Regel reduzierend wirkende Ofenatmosphäre im Gasdrucksinterofen, und zum Vermindern von Wechselwirkungen des Zwischenprodukts mit dem Grafit des Ofens. Dadurch werden Blasenbildung, Verfärbung und Kristallisation im dotierten Quarzglas verhindert. Die Schüttung kann aus undotierter Quarzglaskörnung bestehen oder aus dotierter Quarzglaskörnung und sie kann in radialer Richtung einen Gradienten der Dotierstoff-Konzentration aufweisen, um Spannungen beim Verglasen zu reduzieren. Die geringer dotierten Bereiche können auch in Form geringer dotierter Grünkörper-Außenbereiche vorliegen oder zusätzlich eingebrachte geringer dotierte Granulatschüttungen sein. Wie bereits weiter oben im Zusammenhang mit einer Flammenverglasung des Grünkörpers im Gasdrucksinterofen erläutert, kann der Grünkörper auch zuvor von einem Hüllrohr überfangen oder eingeschlossen werden, um den Gasaustausch zwischen Grünkörper und der reduzierend wirkenden Ofen-Atmosphäre beim Verglasen im Gasdrucksinterofen zu reduzieren. Resultat des Verglasungsvorgangs ist ein Körper aus dotiertem Quarzglas gemäß der vorliegenden Erfindung.
- Eine mechanische Weiterverarbeitung des Quarzglaskörpers, etwa durch Abschleifen mittels eines Umfangsschleifers oder durch Bohren mittels Drill- oder Kernbohrer. Resultat der mechanischen Weiterverarbeitung ist ein mechanisch bearbeiteter Quarzglaskörper, beispielsweise ein dotierter Quarzglasstab, der anschließend in einem Plasma-Beschichtungsprozess zu einer Faservorform weiterverarbeitet werden kann.
- Eine mechanische Politur oder eine Heißpolitur und/oder eine chemische Reinigung der Oberfläche des mechanisch bearbeiteten Quarzglaskörpers, um Verunreinigungen der Oberfläche zu reduzieren.
- Ein Heißhomogenisierungsprozess durch dreidimensionale Verformung des Quarzglaskörpers zur weiteren Verbesserung der Materialhomogenität.
- Der Quarzglaskörper in Stabform kann mit Rohren aus undotiertem oder dotiertem Quarzglas ummantelt werden, um eine Stablaserpreform und oder eine Faservorform herzustellen. Weiterhin kann der Quarzglaskörper in Stab- oder Rohrform eingesetzt werden, um daraus eine mikrostrukturierte Faser mit den Eigenschaften von photonischen Kristallfasern herzustellen. Ferner kann der Quarzglaskörper in Stabform direkt im Faserziehturm zur Faser abgezogen und mit einem geeigneten Coating mit einer geringeren Brechzahl ummantelt werden.

### Ausführungsbeispiel

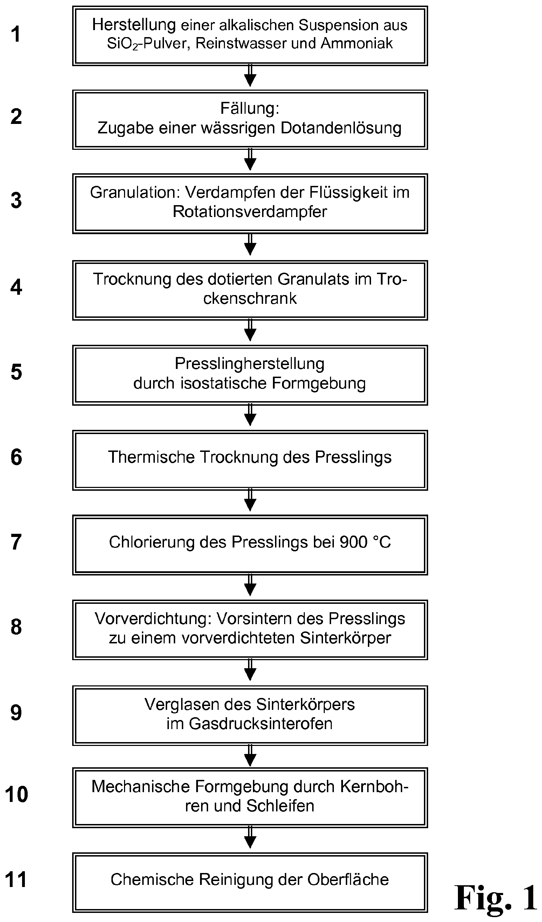

Nachfolgend wird die Erfindung anhand von Ausführungsbeispielen und einer Zeichnung näher erläutert. Als einzige Figur zeigt
- **Fig. 1**: ein Blockdiagramm mit Verfahrensschritten zur Erläuterung der Herstellung von dotiertem Quarzglas gemäß der Erfindung anhand eines Ausführungsbeispiels

Zur Herstellung eines mit Yb₂O₃ und Al₂O₃ dotierten Quarzglases wurde eine Suspension aus diskreten SiO₂-Partikeln in Form von SiO₂-Aggregaten in Reinstwasser hergestellt. Die SiO₂-Aggregate haben eine mittlere Teilchengröße um 10 µm und sie bestehen aus SiO₂-Primärteilchen mit Teilchengrößen im Bereich von 5 nm bis 100 nm. Durch Zugabe einer konzentrierten Ammoniaklösung wurde ein pH-Wert von 9,5 eingestellt (1). Der Feststoffgehalt der alkalischen Suspension lag bei 50 Gew.-%.

Der homogenisierten, alkalischen Suspension wurden Dotierstoffe in gelöster Form und durch zeitlich gesteuerte, tropfenweise Zugabe einer wässrigen Dotierstofflösung aus AlCl₃ und YbCl₃ (Molverhältnis 4:1) unter ständigem Rühren zugeführt (2). Die Zeitspanne zwischen aufeinanderfolgenden Zutropfungen der Dotierstofflösung wurde auf 1 Sekunde eingestellt, wodurch zu gewährleisten ist, dass jeder Tropfen in eine bereits ausreichend homogenisierte Suspension gelangte.

Aufgrund des hohen pH-Wertes der Suspension kommt es unmittelbar zu einer Mischfällung von Hydroxiden der beiden Dotierstoff in Form von Al(OH)₃ und Yb(OH)₃. Die so gebildeten Feststoffteilchen adsorbieren an den vorhandenen Oberflächen der SiO₂-Teilchen und werden dadurch immobilisiert, so dass eine Koagulation der Feststoffteilchen oder eine Sedimentation verhindert wird. Auf diese Weise wird in der Suspension eine Dotierstoffkonzentration von 2 mol-% Al und 0,5 mol-% Yb (bezogen auf den Si-Gehalt der Suspension) eingestellt.

Der Volumenanteil der Dotierstofflösung beträgt 20% des anfänglichen Volumens der Suspension. Während der Dotierung wird der vorab eingestellte pH-Wert der Suspension durch Überschuss an Ammoniak in der Suspension sowie erforderlichenfalls durch weitere Zugabe von Ammoniak und Reinstwasser konstant gehalten, um ungleiche Bedingungen bei der chemischen Fällung der Dotanden und eine Gelierung der Suspension zu vermeiden. Die Hydroxidverbindungen der Dotanden werden auf diese Art und Weise in der Suspension homogen verteilt. Die Suspension wurde kontinuierlich gerührt.

Anschließend wurde die mit dem Dotierstoff versehene Suspension in einem Rotationsverdampfer granuliert (3). Dabei wurde der Suspension die Feuchtigkeit durch Wärmeeinwirkung sehr schnell entzogen. In dem so hergestellten, porösen SiO₂-Granulat waren somit fein und homogen verteilte Al(OH)₃- und Yb(OH)₃-Teilchen in einer Menge enthalten, die in der oxidischen Form eine Dotierung des Quarzglases mit 1 mol-% Al₂O₃ und 0,25 mol-% Yb₂O₃ bewirken.

Das dotierte SiO₂-Granulat wurde bei 200 °C während einer Dauer von 24 h in einer Sauerstoff-Atmosphäre vorbehandelt (4). Dabei wurden Restfeuchte und NH₄Cl, das bei hoher Temperatur durch Bildung flüchtiger Metall-Chlor-Verbindungen zu Dotierstoffverlusten führen kann, entfernt. Anschließend wurde das Granulat bei einem Druck von 100 MPa isostatisch zu Presslingen verarbeitet (5). Die so hergestellten Presslinge wurden in einem Trockenschrank thermisch getrocknet (6) und anschließend bei einer Temperatur von 900 °C einer chlorhaltigen Atmosphäre 5h lang ausgesetzt (7). Danach wurden die Presslinge bei 1600 °C im selben Ofen unter He-Atmosphäre vorgesintert (8). Dabei entstanden weiße, vorverdichtete Sinterkörper mit relativ dichter Außenhaut.

### Beispiel 1

Ein Teil der vorverdichteten Sinterkörper wurde im Gasdrucksinterofen unter reduzierend wirkender Atmosphäre verglast (9). Dazu wurden die vorverdichteten Sinterkörper zuerst unter Vakuum auf 1740 °C aufgeheizt und anschließend bei derselben Temperatur bei einem Druck von 1,5 MPa verglast. Aus den so entstandenen Glaskörpern aus transparentem Quarzglas wurden Kernstäbe mit einer Länge von 20 cm und einem Durchmesser von 15 mm ausgebohrt (10). Mittels eines Plasmabeschichtungsprozesses wurde auf den vorab durch Ätzen in HF-Lösung gereinigten (11) Kernstäben ein F-dotiertes Quarzglas als Mantelglas aufgebaut und so eine Laserfaser-Vorform hergestellt. Diese Vorform wurde anschließend im Faserziehturm zu einer Laserfaser weiterverarbeitet. Die so erhaltene Laserfaser zeigte Laseraktivität.

### Beispiel 2

Ein anderer Teil der vorverdichteten Sinterkörper wurde auf einer Glasmacherdrehbank durch Zonenschmelzen mit einem Knallgasbrenner bei einer Temperatur von ca. 2200 °C zu einem transparenten Quarzglasstab mit einer Länge von 20 cm und einem Durchmesser von 20 mm verglast.

Nach Reinigung der Oberfläche durch Flammenpolitur wurde der Quarzglasstab mit einem fluordotierten Quarzglasrohr überfangen, das unter der Bezeichnung "F320" von der Firma Heraeus Quarzglas GmbH & Co. KG, Hanau, erhältlich ist. Die so hergestellten Faser-Vorformen wurden zu aktiven Laserfasern mit einem Kerndurchmesser von 150 µm und einem Faserdurchmesser von 180 µm gezogen und dabei gleichzeitig mit einem Coating aus UV-härtbarem Acrylat mit kleinerem Brechungsindex beschichtet, dessen Außendurchmesser 205 µm beträgt.

Für IR-Strahlung einer Wellenlänge von 1200 nm wurde für diese Faser eine Grunddämpfung von etwa 50 dB/km ermittelt, was seinen Einsatz als Faserlasermaterial ermöglicht.

Das Vorverdichten zu einem Sinterkörper gemäß Verfahrensschritt (8) und das Verglasen gemäß Verfahrensschritt (9) können auch in einem Verfahrensgang im Gasdrucksinterofen erfolgen.

## Patentansprüche

1. Verfahren zur Herstellung von co-dotiertem Quarzglas, indem eine Suspension bereitgestellt wird, die SiO₂-Teilchen in einer wässrigen Flüssigkeit enthält und der eine Ausgangsverbindung für einen ersten Dotierstoff und eine Ausgangsverbindung für einen zweiten Dotierstoff zugeführt werden, wobei mindestens ein Teil der Teilchen des ersten Dotierstoffs und des zweiten Dotierstoffs oder der Teilchen von Vorläufersubstanzen derselben in der Suspension als Präzipitat einer Fällungsreaktion der Ausgangsverbindungen erzeugt werden, und dass die Flüssigkeit unter Bildung eines co-dotierten Zwischenprodukts, das Teilchen des ersten Dotierstoffs und Teilchen des zweiten Dotierstoffs oder Teilchen von Vorläufersubstanzen der Dotierstoffe enthält, entfernt wird, und aus dem co-dotierten Zwischenprodukt durch Sintern das co-dotierte Quarzglas gebildet wird, wobei der Suspension die Ausgangsverbindungen von erstem und zweitem Dotierstoff in gelöster Form zugegeben werden, und dass die Fällungsreaktion als pH-Wert-gesteuerte Mischfällung herbeigeführt wird, indem der pH-Wert der Suspension derart eingestellt ist, dass bei der Zugabe der Ausgangsverbindungen Teilchen des ersten Dotierstoffs und Teilchen des zweiten Dotierstoffs oder von deren Vorläufersubstanzen unmittelbar ausfallen.

2. Verfahren nach Anspruch 1, **dadurch gekennzeichnet, dass** eine wässrige Suspension bereitgestellt, homogenisiert und auf einen pH-Wert oberhalb von 7, vorzugsweise oberhalb von 9, eingestellt wird.

3. Verfahren nach Anspruch 2, **dadurch gekennzeichnet, dass** der pH-Wert der Suspension bei maximal 12, vorzugsweise bei maximal 10, gehalten wird, wobei die Einstellung und Änderung des pH-Werts der Suspension durch Zugabe alkalifreier Säuren oder Basen durchgeführt wird.

4. Verfahren nach Anspruch 3, **dadurch gekennzeichnet, dass** als alkalifreie Base Stickstoffhydride, insbesondere Ammoniak, Ammoniumsalze, Hydrazin oder Amine, wie Hydroxylamin, eingesetzt werden.

5. Verfahren nach einem der vorhergehenden Ansprüche, **dadurch gekennzeichnet, dass** der pH-Wert der Suspension beim Zuführen der gelösten Ausgangsverbindungen durch Zugabe eines Hilfsstoffes gehalten oder eingestellt wird.

6. Verfahren nach Anspruch 4 und 5, **dadurch gekennzeichnet, dass** die Suspension einen Überschuss an Ammoniak enthält.

7. Verfahren nach einem der vorhergehenden Ansprüche, **dadurch gekennzeichnet, dass** bei der Zugabe der Ausgangsverbindungen, der Flüssigkeitsgehalt der Suspension durch Zugabe von Wasser, Ammoniak und/oder wässrigen Lösungen erhöht wird.

8. Verfahren nach einem der vorhergehenden Ansprüche, **dadurch gekennzeichnet, dass** die Suspension während der Zugabe der Ausgangsverbindungen mechanisch bewegt wird.

9. Verfahren nach Anspruch 8, **dadurch gekennzeichnet, dass** die Ausgangsverbindung in einer Lösung vorliegt, die der Suspension tropfenweise zugeführt wird, wobei die Suspension vor jeder Zugabe eines Tropfens mechanisch bewegt wird.

10. Verfahren zur Herstellung von co-dotiertem Quarzglas, indem eine auf einen ersten niedrigeren pH-Wert eingestellte Suspension bereitgestellt wird, die SiO₂-Teilchen sowie Ausgangsverbindungen für einen ersten und für einen zweiten Dotierstoff in jeweils gelöster Form in einer wässrigen Flüssigkeit enthält, und dass anschließend der pH-Wert der Suspension auf einen zweiten, höheren Wert erhöht wird, wobei Teilchen des ersten Dotierstoffs und Teilchen des zweiten Dotierstoffs oder von deren Vorläufersubstanzen in der Suspension als Präzipitat einer pH-Wert-gesteuerten Umkehrfällung ausfallen, und dass die Flüssigkeit unter Bildung eines dotierten Zwischenprodukts, das Teilchen des ersten und zweiten Dotierstoffs oder Teilchen von Vorläufersubstanzen des ersten und zweiten Dotierstoffs enthält, entfernt wird, und aus dem dotierten Zwischenprodukt durch Sintern das dotierte Quarzglas gebildet wird, **dadurch gekennzeichnet, dass** als erster Dotierstoff Ytterbiumoxid und als zweiter Dotierstoff Aluminiumoxid eingesetzt werden.

11. Verfahren nach Anspruch 10, **dadurch gekennzeichnet, dass** die Erhöhung des pH-Wertes durch Erhöhung der Temperatur der Suspension bewirkt wird, indem eine bei niedrigerer Temperatur in der Suspension als Säure wirkende Verbindung durch Erhöhung der Temperatur unter Freisetzung einer in der Suspension als Base wirkenden Substanz zersetzt wird.

12. Verfahren nach Anspruch 11, **dadurch gekennzeichnet, dass** als die bei niedrigerer Temperatur in der Suspension als Säure wirkende Verbindung Hexamethylentetramin eingesetzt wird.

13. Verfahren nach einem der vorhergehenden Ansprüche, **dadurch gekennzeichnet, dass** der Feststoffgehalt der Suspension bei der Fällung des ersten oder zweiten Dotierstoffs weniger als 80 Gew.-%, vorzugsweise weniger als 70 Gew.-%, beträgt.

## Claims

1. A method for producing co-doped quartz glass by providing a suspension that comprises SiO₂ particles in an aqueous liquid, supplying to the suspension a starting compound for a first dopant and a starting compound for a second dopant, wherein the starting compounds of the first dopant and for the second dopant are added to the suspension in dissolved form, generating particles of, or of particles of precursor substances of, the first and second dopants in the suspension as a precipitate of a precipitation reaction of the starting compounds, removing the liquid so as to form a co-doped intermediate product containing particles of the first dopant and particles of the second dopant or particles of precursor substances of the dopants, forming the co-doped quartz glass from the co-doped intermediate product by sintering, wherein the precipitation reaction is induced as a pH value-controlled mixed precipitation wherein the pH value of the suspension is adjusted such that, upon addition of the starting compounds, the particles of the first dopant and the particles of the second dopant or particles of the precursor substances of the first and second dopants are precipitated immediately.

2. The method according to claim 1, **characterized in that** an aqueous suspension is provided, homogenized and set to a pH value above 7, preferably above 9.

3. The method according to claim 2, **characterized in that** the pH value of the suspension is kept at not more than 12, preferably not more than 10, the pH value of the suspension being adjusted and changed by adding alkali-free acids or bases.

4. The method according to claim 3, **characterized in that** nitrogen hydrides, particularly ammonia, ammonium salts, hydrazines or amines, such as hydroxylamine, are used as the alkali-free base.

5. The method according to any one of the preceding claims, **characterized in that** the pH value of the suspension is maintained or adjusted during supply of the dissolved starting compound by adding an adjuvant.

6. The method according to claims 4 and 5, **characterized in that** the suspension contains an excess amount of ammonia.

7. The method according to any one of the preceding claims, **characterized in that** upon addition of the starting compounds the liquid content of the suspension is increased by adding water, ammonia and/or aqueous solutions.

8. The method according to any one of the preceding claims, **characterized in that** the suspension is mechanically stirred while the starting compounds are added.

9. The method according to claim 8, **characterized in that** the starting compounds are present in a solution which is supplied to the suspension drop by drop, with the suspension being mechanically stirred before each addition of a drop.

10. Method for producing co-doped quartz glass by providing a suspension which is adjusted to a first lower pH value and which contains SiO₂ particles and starting compounds for a first and for a second dopant each in dissolved form in an aqueous liquid, and in that the pH value of the suspension is then increased to a second, higher value, such that particles of the first dopant and particles of the second dopant or of precursor substances thereof precipitating in the suspension as a precipitate of a pH value-controlled reverse precipitation, and removing the liquid so as to form a doped intermediate product containing particles of the first dopant and particles of the second dopant or particles of precursor substances of the first and second dopants, forming the doped quartz glass from the doped intermediate product by sintering, **characterized in that** ytterbium oxide is used as the first dopant and aluminium oxide as the second dopant.

11. The method according to claim 10, **characterized in that** the pH value is increased by increasing the temperature of the suspension **in that** a compound acting at the lower temperature in the suspension as an acid is decomposed by increasing the temperature with release of a substance acting as a base in the suspension.

12. The method according to claim 11, **characterized in that** hexamethylene tetramine is used as the compound acting as an acid at the lower temperature in the suspension.

13. The method according to any one of the preceding claims, **characterized in that** the solids content of the suspension in the precipitation of the at least one dopant is less than 80% by wt., preferably less than 70% by wt.

## Revendications

1. Procédé de production de verre de quartz co-dopé en ce qu'une suspension est fournie, laquelle contient des particules de SiO₂ dans un liquide aqueux et à laquelle sont amenés un composé de départ pour un premier dopant et un composé de départ pour un deuxième dopant, dans lequel au moins une partie des particules du premier dopant et du deuxième dopant ou des particules de précurseurs de ceux-ci sont générées dans la suspension en tant que précipité d'une réaction de précipitation des composés de départ, et que le liquide est supprimé en formant un produit intermédiaire co-dopé, qui contient des particules du premier dopant et des particules du deuxième dopant ou des particules de précurseurs des dopants et le verre de quartz co-dopé est formé à partir du produit intermédiaire co-dopé par frittage, dans lequel les composés de départ d'un premier et d'un deuxième dopant sont ajoutés sous une forme dissoute à la suspension, et que la réaction de précipitation est entraînée en tant que précipitation de mélange à valeur pH commandée en ce que la valeur pH de la suspension est réglée de telle manière lors de l'ajout des composés de départ, des particules du premier dopant et des particules du deuxième dopant ou de leurs précurseurs sont précipitées directement.

2. Procédé selon la revendication 1, **caractérisé en ce qu'**une suspension aqueuse est fournie, homogénéisée et réglée sur une valeur de pH supérieure à 7, de préférence supérieure à 9.

3. Procédé selon la revendication 2, **caractérisé en ce que** la valeur pH de la suspension est maintenue à 12 au maximum, de préférence à 10 au maximum, dans lequel le réglage et la modification de la valeur de pH de la suspension sont effectués par l'ajout d'acides ou de base sans alcalins.

4. Procédé selon la revendication 3, **caractérisé en ce que** sont utilisés en tant que bases sans alcalins des hydrides d'azote, en particulier de l'ammoniaque, des sels d'ammonium, de l'hydrazine ou des aminés, telles que de l'hydroxylamine.

5. Procédé selon l'une quelconque des revendications précédentes, **caractérisé en ce que** la valeur pH de la suspension est maintenue ou réglée lors de l'amenée des composés de départ dissous par l'ajout d'un excipient.

6. Procédé selon la revendication 4 et 5, **caractérisé en ce que** la suspension contient un excédent d'ammoniaque.

7. Procédé selon l'une quelconque des revendications précédentes, **caractérisé en ce que** lors de l'ajout des composés de départ, la teneur en liquide de la suspension est augmentée par l'ajout d'eau, d'ammoniaque et/ou de solutions aqueuses.

8. Procédé selon l'une quelconque des revendications précédentes, **caractérisé en ce que** la suspension est déplacée de manière mécanique lors de l'ajout des composés de départ.

9. Procédé selon la revendication 8, **caractérisé en ce que** le composé de départ est présent dans une solution, qui est amenée goutte à goutte à la suspension, dans lequel la suspension est déplacée de manière mécanique avant chaque ajout d'une goutte.

10. Procédé de production d'un verre de quartz co-dopé, en ce qu'est fournie une suspension réglée sur une première valeur de pH inférieure, qui contient des particules de SiO₂ ainsi que des composés de départ pour un premier dopant et pour un deuxième dopant sous une forme respectivement dissoute dans un liquide aqueux, et qu'ensuite la valeur de pH de la suspension est augmentée sur une deuxième valeur plus élevée, dans lequel des particules du premier dopant et des particules du deuxième dopant ou de leurs précurseurs se précipitent dans la suspension en tant que précipité d'une précipitation inversée à valeur pH commandée, et que le liquide est supprimé en formant un produit intermédiaire dopé, qui contient des particules du premier et deuxième dopant ou des particules de précurseurs du premier et deuxième dopant, et le verre de quartz dopé est formé à partir du produit intermédiaire dopé par frittage, caractérisé en que sont utilisés en tant que premier dopant de l'oxyde d'ytterbium et en tant que deuxième dopant de l'oxyde d'aluminium.

11. Procédé selon la revendication 10, **caractérisé en ce que** l'augmentation de la valeur de pH est entraînée par l'augmentation de la température de la suspension **en ce qu'**un composé agissant en tant qu'acide dans la suspension à une température inférieure est décomposé par augmentation de la température en libérant une substance agissant en tant que base dans la suspension.

12. Procédé selon la revendication 11, **caractérisé en ce qu'**est utilisé en tant que composé agissant en tant qu'acide dans la suspension en cas de température inférieure, de hexaméthylène tétramine.

13. Procédé selon l'une quelconque des revendications précédentes, **caractérisé en ce que** la teneur en solide de la suspension est inférieure à 80 % en poids, de préférence inférieure à 70 % en poids, lors de la précipitation du premier ou du deuxième dopant.
